# FASCICULE DE BREVET EUROPEEN

(11) **EP 2 700 541 B1**
(45) Date de publication et mention de la délivrance du brevet: **27.07.2016**
(21) Numéro de dépôt: 13180935.2
(22) Date de dépôt: 19.08.2013
(51) Int. Cl.: B60R 11/00, B60R 11/02

(54) **Mécanisme de fixation rapide**
Schnellbefestigungsvorrichtung
Quick attachment mechanism

(30) Priorité: 23.08.2012 FR 1202288
(43) Date de publication de la demande: 26.02.2014
(73) Titulaire: NEXTER Systems, 42328 Roanne (FR)
(72) Inventeur: SAUTET, Jean-Yves, 18023 BOURGES Cedex (FR); DUPART, Thierry, 18023 BOURGES Cedex (FR)
(74) Mandataire: Chaillot, Geneviève

(56) Documents cités:
- DE-U1- 8 811 528
- US-B2- 8 091 850

## Description

Le domaine technique de l'invention est celui des mécanismes de fixation rapide pour équipements de bord, en particulier pour véhicules.

On trouve à bords des véhicules (et notamment des véhicules militaires) de nombreux équipements électroniques tels que des systèmes de positionnement par satellite (plus connus par l'acronyme GPS) ou des ordinateurs de bord. Ceux-ci doivent être aisément accessibles aux utilisateurs, à la fois en lecture et pour effectuer des manipulations du type saisies de données ou réglages.

Le contexte d'emploi de ces équipements est souvent celui de l'urgence et de ce fait, le montage ou le démontage de ces équipements doit pouvoir se faire très rapidement en quelques secondes.

Ainsi le brevet US8091850 enseigne un moyen de fixation d'un écran embarqué au moyen de deux goulottes correspondant avec les parties haute et basse de l'écran. Ces goulottes enserrent l'écran par l'action d'un ressort de traction. Les goulottes sont maintenues serrées par un ergot tournant d'un quart de tour et s'engageant dans un logement de l'écran.

Un tel mécanisme présente des inconvénients majeurs pour un emploi militaire. En effet dans l'environnement d'utilisation militaire, les chocs et vibrations sont fréquents, ce qui favorise la rotation impromptue de l'ergot et l'écartement des mâchoires qui risquent de laisser l'écran s'échapper.

De plus la mise en place et le retrait de l'écran ne sont pas commodes car ils nécessitent de maintenir les goulottes écartées pour pouvoir retirer ou mettre en placé l'écran. De ce fait, l'opération d'écartement des goulottes doit se faire d'une main alors que l'autre main doit mettre en place l'écran.

Cette opération est d'autant plus délicate et longue que le ressort rappelant les goulottes l'une vers l'autre, sera raide.

Ainsi, l'invention se propose de résoudre un problème de mise en place ou de retrait aisé, rapide et sûr, d'un équipement de bord dans un véhicule, en particulier un véhicule militaire.

L'invention a pour objet un mécanisme de fixation rapide destiné à solidariser ou désolidariser un équipement embarqué dans un véhicule, mécanisme caractérisé en ce qu'il comporte:
- un bâti solidaire du véhicule, bâti comportant au moins un ergot à une de ses extrémités et au moins une mâchoire solidaire d'une tige mobile en translation contre l'action d'un ressort à sa seconde extrémité,
- une platine support destinée à être solidaire de l'équipement et à être enserrée entre l'ergot et la mâchoire,
- un moyen de blocage bistable solidaire de la mâchoire et comportant une bielle et une biellette assurant une liaison de l'extrémité de la tige avec le bâti par trois articulations d'axes parallèles les uns aux autres, une première articulation reliant la bielle et la tige, une seconde articulation reliant la bielle et la biellette et une troisième articulation liant enfin la biellette avec le bâti, les articulations étant disposées de telle sorte que, lors du pivotement de la biellette par rapport au bâti, la seconde articulation puisse être déplacée par rapport à un plan d'alignement contenant les axes des première et troisième articulations, la seconde articulation se trouvant dans une position stable de part et d'autre de ce plan, l'action du ressort rendant instable la position de l'axe de la seconde articulation dans le plan d'alignement.

Avantageusement, la platine pourra comporter au moins une surface d'appui destinée à correspondre avec l'ergot ainsi qu'une cale destinée à correspondre avec la mâchoire.

Selon un mode de réalisation le mécanisme est incliné de façon à positionner la mâchoire en arrière d'un plan vertical passant par l'axe des ergots.

Avantageusement, le moyen de blocage comporte un levier solidaire de la biellette et qui est rapproché de l'extrémité inférieure du bâti quand la mâchoire est fermée.

L'invention sera mieux comprise à la lecture de la description suivante faite en référence aux dessins annexés dans lesquels :
La figure 1 représente une vue de trois quarts d'un mécanisme selon l'invention.
La figure 2 représente une vue de trois quarts d'un mécanisme selon l'invention sans la platine.
La figure 3 représente une vue de trois quarts d'une platine seule.
La figure 4 représente une vue en coupe partielle verticale d'un mécanisme selon l'invention lors de la première étape de fixation de la platine.
La figure 5 représente une vue en coupe partielle verticale d'un mécanisme selon l'invention lors de la seconde étape de fixation de la platine.
La figure 6 représente une vue en coupe partielle verticale d'un mécanisme selon l'invention lors de la troisième étape de fixation de la platine.
La figure 7 est une vue analogue à la figure 5 mais dans laquelle le mécanisme est dans une position inclinée.
La figure 8 est une vue en coupe partielle latérale d'un dispositif selon un autre mode de réalisation de l'invention comportant un ressort de traction.

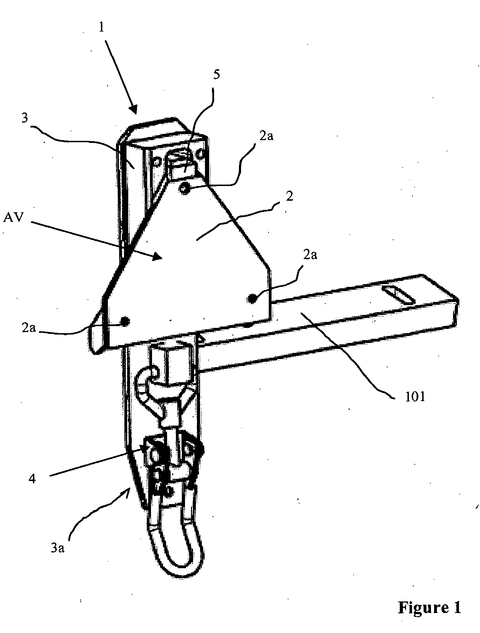

Selon la figure 1 et selon un mode de réalisation de l'invention, le mécanisme de fixation rapide 1 comporte un bras 101 destiné à solidariser le mécanisme 1 à un véhicule militaire (véhicule non représenté), par exemple à une paroi de l'habitacle.

Le mécanisme 1 comporte une platine 2 destinée à recevoir au niveau de sa face avant AV un équipement électronique de type écran de contrôle par exemple (équipement non représenté). L'équipement est fixé d'une façon permanente sur la platine 2. La solidarisation de l'équipement sur la platine 2 pourra être obtenue par l'intermédiaire de vis (non représentées) traversant des perçages 2a.

La platine 2 est rendue solidaire d'une façon démontable avec un bâti 3 placé en arrière de la platine 2.

Le bâti 3 comporte à cet effet, à son extrémité inférieure, un moyen de blocage bistable à arc-boutement 4. Ce moyen de blocage agit sur une mâchoire 5 portée par l'extrémité supérieure du bâti 3. Cette mâchoire 5 coopère avec un bord supérieur de la platine 2 lorsque le dispositif est verrouillé.

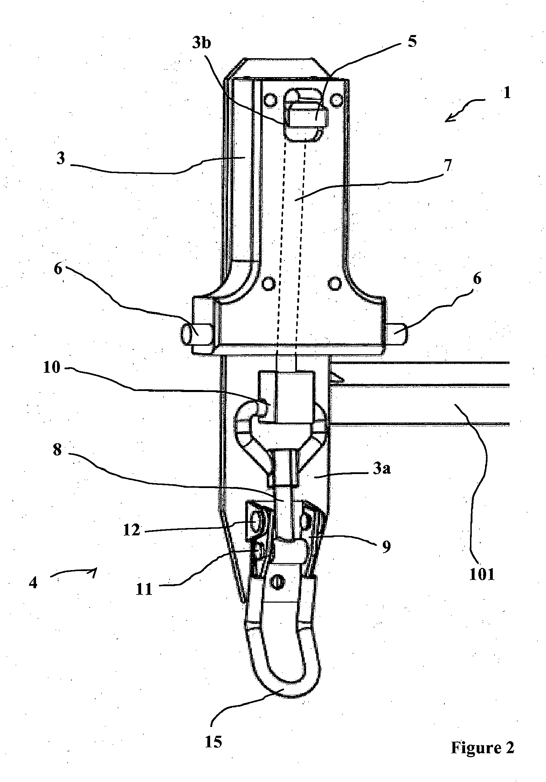

Selon la figure 2, le moyen de blocage 4 est solidaire du bâti 3 au niveau d'une extrémité inférieure 3a de celui-ci. Les côtés du bâti 3 comportent chacun un ergot 6. La mâchoire 5 est placée dans un trou oblong 3b du bâti 3 et dépasse de la face avant du bâti 3. Ce trou 3b est destiné à guider la translation verticale de la mâchoire 5. La mâchoire 5 est solidaire du moyen de blocage 4 grâce à une tige 7. Le moyen de blocage 4 comporte une bielle 8 solidaire de la tige 7 par une première articulation 10. La bielle 8 est solidaire d'une biellette 9 par une seconde articulation 11 de type pivot. La biellette 9 est solidaire du bâti 3 par une troisième articulation pivot 12 portée par un étrier. Les axes des trois articulations 10,11 et 12 sont parallèles les uns aux autres. La biellette 9 a une forme en U et elle est prolongée par un levier 15 de manipulation destiné à commander le verrouillage ou le déverrouillage du moyen de blocage 4.

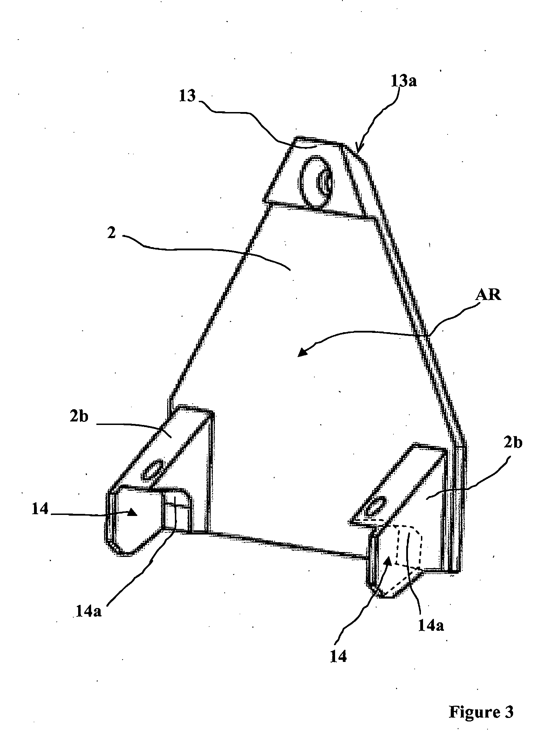

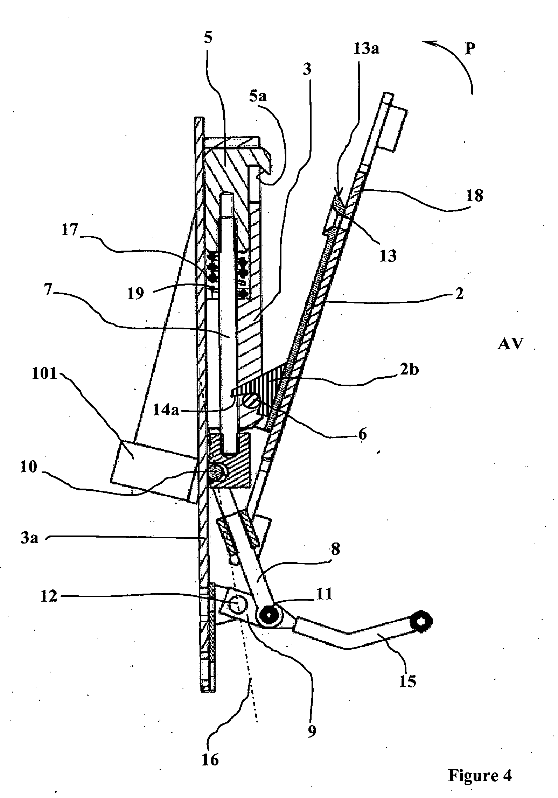

Selon la figure 3, la platine 2 comporte au voisinage de son bord supérieur une cale 13 qui est destinée à coopérer avec la mâchoire 5 décrite précédemment. Comme on le voit à la figure 4, la mâchoire 5 comporte à cet effet un bec ayant un plan incliné 5a qui coopère avec un plan complémentaire 13a porté par la cale 13.

La partie inférieure de la platine 2 comporte deux ailes 2b comportant chacune un logement 14. Chaque logement 14 est destiné à recevoir un ergot 6 du bâti. Chaque logement 14 comporte ainsi une surface d'appui 14a pour chaque ergot. Les logements 14 sont ouverts vers le bas de la platine 2 pour permettre le passage des ergots 6.

La figure 4 représente la première étape de mise en place d'un équipement. Ici l'équipement n'est pas représenté. Il est fixé à une plaque d'interface 18 qui est elle-même fixée à la platine 2. Dans cette position déverrouillée, la seconde articulation 11 du moyen de blocage 4 est située en avant AV d'un plan d'alignement 16 qui contient les axes des première et troisième articulations 10 et 12.

La tige 7 qui est montée dans le bâti 3 de manière à pouvoir coulisser est poussée vers le haut par l'action d'un ressort de compression 17 prenant appui par une de ses extrémités sur un épaulement 19 du bâti 3 et par son autre extrémité sur la mâchoire 5.

La mâchoire 5 est donc également poussée vers le haut par l'action du ressort.

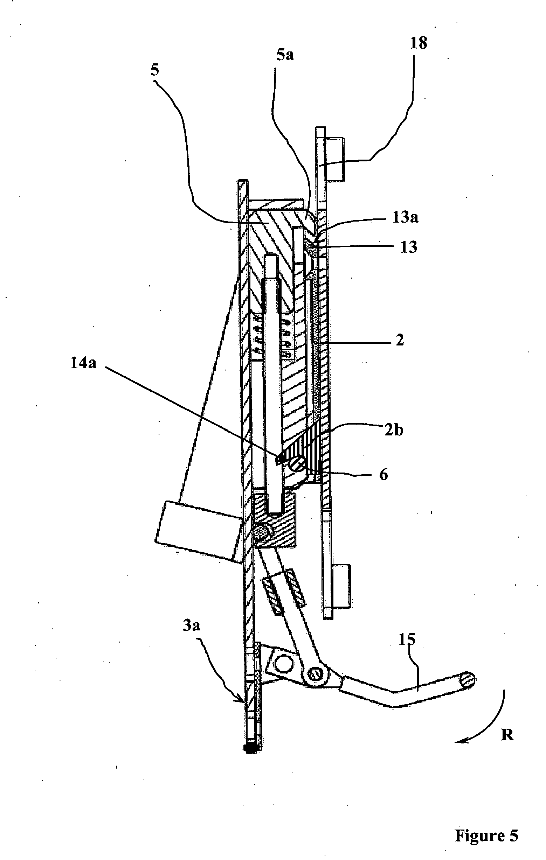

L'utilisateur positionne la platine 2 portant l'équipement de telle sorte que les surfaces d'appui 14a des ailes 14 de la platine 2 soient en appui sur les ergots 6 du bâti 3. La platine 2 est ensuite poussée par l'utilisateur (flèche P) pour venir en appui contre le bâti 3, dans la position qui est représentée à la figure 5.

Dans cette position, le plan 13a de la cale 13 se positionne en dessous de la mâchoire 5.

Le pivotement P s'est effectué autour des ergots 6. On notera qu'au cours de ce pivotement les surfaces d'appui 14a des ailes 2b sécurisent le positionnement de la platine 2 portant l'équipement.

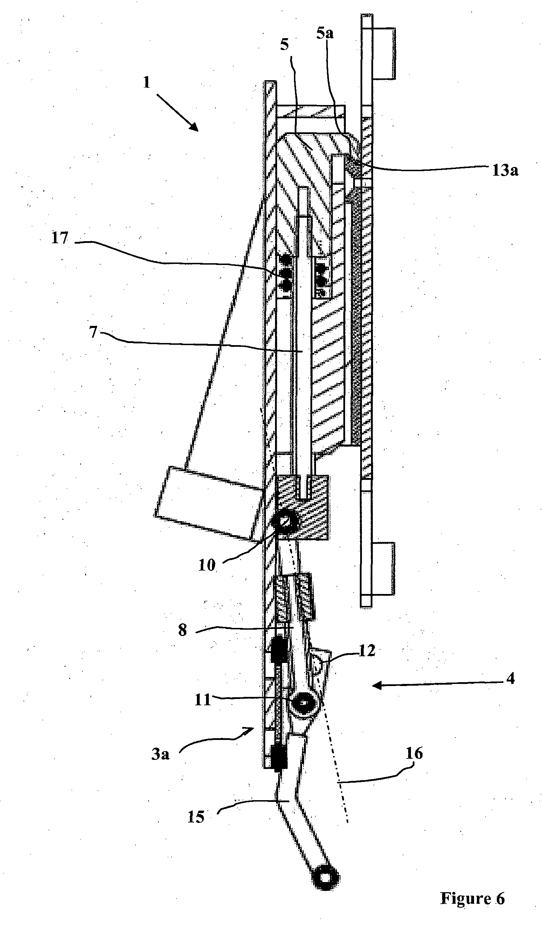

L'opérateur fait alors pivoter (flèche R - figure 5) le levier 15 pour verrouiller la platine 2 (figure 6). Le levier 15 est alors rapproché de l'extrémité inférieure 3a du bâti et vient en appui contre cette dernière.

La figure 6 montre le mécanisme 1 dans sa position verrouillée. Le levier 15 a été poussé et appliqué en appui contre l'extrémité inférieure 3a du bâti 3.

Lors du mouvement de pivotement du levier 15, la seconde articulation 11 est passée en arrière du plan d'alignement 16. Elle trouve ainsi une position stable. Ce mouvement entraîne le coulissement vers le bas de la mâchoire 5 entraînée par la tige 7 et la bielle 8. La mâchoire 5 comprime le ressort 14 dont l'action s'oppose à l'ouverture du moyen de blocage 4 lui conférant une seconde position stable. Le plan incliné 5a du bec de la mâchoire 5 est placé en contact avec le plan 13a de la cale 13, le retrait de la platine 2 et donc de l'équipement est alors impossible.

Ainsi du fait des dispositions particulières des articulations, lorsque l'axe de la deuxième articulation 11 se trouve dans le plan d'alignement 16, cette position est instable. L'action du ressort 17 a pour effet soit de ramener l'axe de la deuxième articulation 11 vers l'avant (position déverrouillée de la figure 5) soit de le pousser vers le bâti (position verrouillée de la figure 6).

La seconde articulation 11 a une position stable de part et d'autre du plan d'alignement 16.

Par ce mécanisme, la fixation de l'équipement est rendue très aisée et le verrouillage rapide et efficace même en cas de chocs violents.

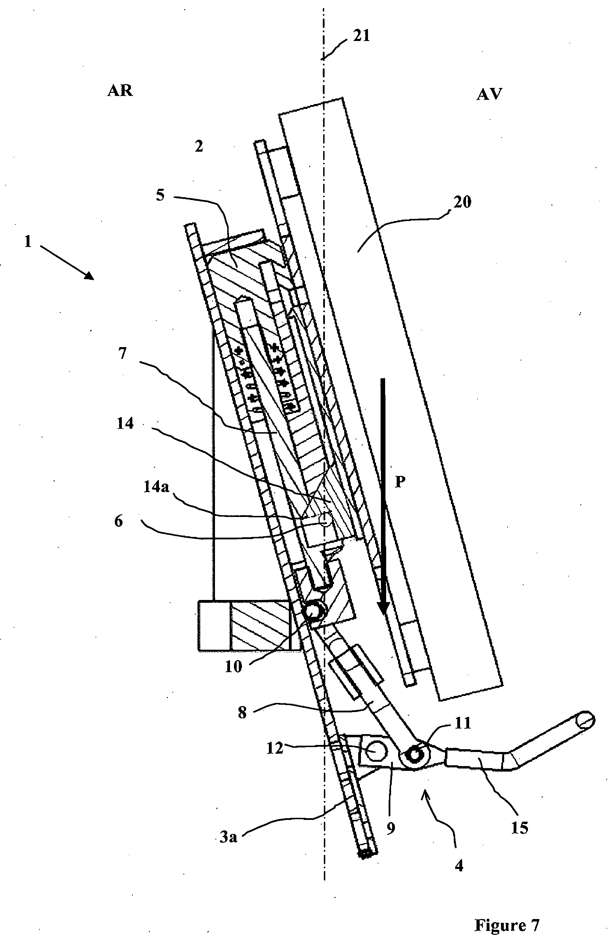

Dans la configuration d'emploi la plus fréquente représentée à la figure 7, l'équipement 20 et le mécanisme 1 sont légèrement inclinés, la mâchoire 5 se trouvant en arrière AR d'un plan vertical 21 passant par l'axe des ergots 6. Lors de son positionnement, l'équipement 20 peut alors tenir en appui sur les ergots 6 grâce aux surfaces d'appui 14a par la simple action de son poids P, la platine 2 étant par ailleurs elle-même en appui sur le bâti 3 en attendant que le verrouillage soit effectué par l'opérateur. L'opérateur n'a alors besoin que d'une main.

Dans un premier temps il peut déposer l'équipement sur le mécanisme 1 d'une seule main, puis de cette même main, il peut abaisser le levier 15 pour verrouiller le mécanisme 1.

A titre de variante, il est possible de fixer l'équipement électronique directement sur la platine 2 sans le recours à une plaque interface 16.

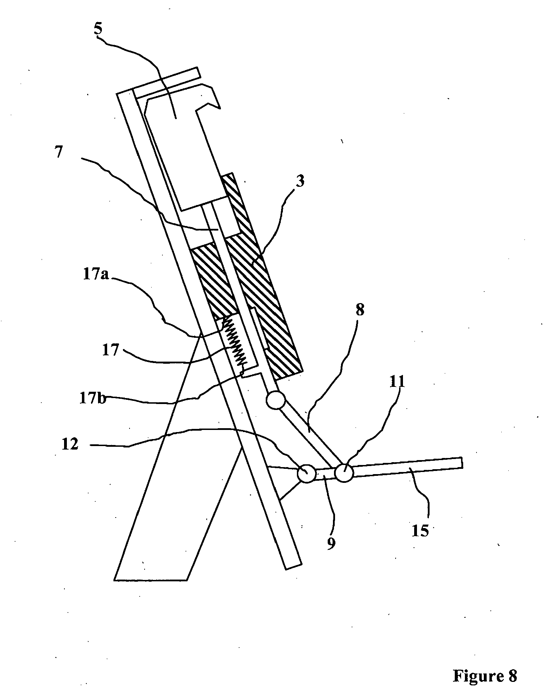

Selon la figure 8 qui représente un autre mode de réalisation, l'homme du métier pourra utiliser au niveau du moyen de blocage bistable un ressort 17 qui est sollicité en traction et qui a son extrémité haute 17a solidaire du bâti 3 alors que son extrémité basse 17b est solidaire de la tige 7. Une telle disposition du ressort permet d'avoir un effet équivalent au ressort de compression 17 tel que décrit précédemment.

Ainsi comme représenté à la figure 8, en position ouverte, la mâchoire 5 est par défaut maintenue en haut dans la première position stable décrite plus avant, par l'effet de traction vers le haut du ressort sur la tige 7.

## Revendications

1. Mécanisme (1) de fixation rapide destiné à solidariser ou désolidariser un équipement embarqué dans un véhicule, mécanisme **caractérisé en ce qu'**il comporte :
- un bâti (3) solidaire du véhicule, bâti (3) comportant au moins un ergot (6) à une de ses extrémités et au moins une mâchoire (5) solidaire d'une tige (7) mobile en translation contre l'action d'un ressort (17) à sa seconde extrémité,
- une platine (2) support destinée à être solidaire de l'équipement et à être enserrée entre l'ergot (6) et la mâchoire (5),
- un moyen de blocage (4) bistable solidaire de la mâchoire (5) et comportant une bielle (8) et une biellette (9) assurant une liaison de l'extrémité de la tige (7) avec le bâti (3) par trois articulations (10,11,12) d'axes parallèles les uns aux autres, une première articulation (10) reliant la bielle (8) et la tige (7), une seconde articulation (11) reliant la bielle (8) et la biellette (9) et une troisième articulation (12) liant enfin la biellette (9) avec le bâti (3), les articulations (10,11,12) étant disposées de telle sorte que, lors du pivotement de la biellette (9) par rapport au bâti (3), la seconde articulation (11) puisse être déplacée par rapport à un plan d'alignement (16) contenant les axes des première (10) et troisième (12) articulations, la seconde articulation (11) se trouvant dans une position stable de part et d'autre de ce plan, l'action du ressort (17) rendant instable la position de l'axe de la seconde articulation (11) dans le plan d'alignement (16).

2. Mécanisme (1) de fixation rapide selon la revendication 1 **caractérisé en ce que** la platine (2) comporte au moins une surface d'appui (14a) destinée à correspondre avec l'ergot (6) ainsi qu'une cale (13) destinée à correspondre avec la mâchoire (5).

3. Mécanisme (1) de fixation rapide selon la revendication 1 **caractérisé en ce que** le mécanisme (1) est incliné de façon à positionner la mâchoire (5) en arrière d'un plan vertical passant par l'axe des ergots (6).

4. Mécanisme (1) de fixation rapide selon la revendication 1 **caractérisé en ce que** le moyen de blocage (4) comporte un levier (15) solidaire de la biellette (9) et qui est rapproché de l'extrémité inférieure (3a) du bâti (3) quand la mâchoire (5) est fermée.

## Patentansprüche

1. Schnellbefestigungsvorrichtung (1), um eine in ein Fahrzeug eingebettete Ausrüstung zu verbinden oder zu lösen, **gekennzeichnet dadurch, dass** sie folgendes umfasst:
- ein Gestell (3), das einstückig mit dem Fahrzeug ist, mit mindestens einem Nocken (6) an einem seiner Enden und mindestens eine Backe (5), die mit einem Schaft (7) verbunden ist, der gegen die Wirkung einer Feder (17) an seinem zweiten Ende verschiebbar ist,
- eine Tragplatte (2), die dazu bestimmt ist, einstückig mit der Ausrüstung zu sein und zwischen dem Nocken (6) und der Backe (5) eingespannt zu sein,
- ein bistabiles Blockierungsmittel (4), einstückig mit der Backe (5) und mit einer Schubstange (8) und einem Schaltgestänge (9), das eine Verbindung des Endes des Schafts (7) mit dem Gestell (3) durch drei Gelenke (10,11,12) von zueinander parallelen Achsen sichert, wobei ein erstes Gelenk (10) die Schubstange (8) und den Schaft (7) verbindet, ein zweites Gelenk (11) die Schubstange (8) und das Schaltgestänge (9) verbindet und ein drittes Gelenk (12) schließlich das Schaltgestänge (9) mit dem Gestell (3) verbindet, wobei die Gelenke (10,11,12) derart angeordnet sind, dass, während der Drehung des Schaltgestänges (9) in Bezug auf das Gestell (3) das zweite Gelenk (11) in Bezug auf eine Ausrichtungsebene (16) verschoben werden kann, die die Achsen des ersten (10) und des dritten (12) Gelenks enthält, wobei das zweite Gelenk (11) sich in einer stabilen Position an beiden Seiten dieser Ebene befinden, wobei die Wirkung der Feder (17) die Position der Achse des zweiten Gelenks (11) in der Ausrichtungsebene (16) instabil macht.

2. Schnellbefestigungsvorrichtung (1) nach Anspruch 1, **gekennzeichnet dadurch, dass** die Platte (2) mindestens eine Auflagefläche (14a) umfasst, um mit dem Nocken (6) zusammenzupassen, sowie einen Keil (13), um mit der Backe (5) zusammenzupassen.

3. Schnellbefestigungsvorrichtung (1) nach Anspruch 1, **gekennzeichnet dadurch, dass** sie geneigt ist, um die Backe (5) hinter einer vertikale Ebene zu positionieren, die durch die Achse der Nocken (6) hindurchgeht.

4. Schnellbefestigungsvorrichtung (1) nach Anspruch 1, **gekennzeichnet dadurch, dass** das Blockierungsmittel (4) einen Hebel (15) umfasst, der einstückig mit dem Schaltgestänge (9) ist und der sich an das untere Ende (3a) des Gestells (3) annähert, wenn die Backe (5) geschlossen ist.

## Claims

1. Quick-release fastening mechanism (1) for rendering integral or detaching an equipment on board of a vehicle, the mechanism being **characterized in that** it comprises:
- a frame (3) integral with the vehicle, wherein the frame (3) comprises at least one detent (6) at one of its ends and at least one jaw (5) integral with a rod (7) moveable in translation against the action of a spring (17) at its second end,
- a support plate (2) intended to be integral with the equipment and to be held tightly between the detent (6) and the jaw (5),
- a bistable blocking means (4) integral with the jaw (5) and comprising a connecting rod (8) and a link (9) ensuring a connection of the rod end (7) to the frame (3) by three joint hinges (10, 11, 12) having axes parallel to each other, a first joint hinge (10) linking the connecting rod (8) and the rod (7), a second joint hinge (11) linking the connecting rod (8) and the link (9) and finally a third joint hinge (12) linking the link (9) and the frame (3), the joint hinges (10, 11, 12) being provided such that, upon pivoting of the link (9) with respect to the frame (3), the second joint hinge (11) can be moved with respect to an alignment plane (16) including the axes of the first (10) and third (12) joint hinges, the second joint hinge (11) being in a stable position on both sides of the plane, the action of the spring (17) rendering unstable the position of the axis of the second joint hinge (11) in the alignment plane (16).

2. Quick-release fastening mechanism (1) according to Claim 1, **characterized in that** the plate (2) comprises at least one bearing surface (14a) for matching with the detent (6), as well as a wedging block (13) for matching with the jaw (5).

3. Quick-release fastening mechanism (1) according to Claim 1, **characterized in that** the mechanism (1) is tilted so as to position the jaw (5) rearward of a vertical plane passing through the axis of the detents (6).

4. Quick-release fastening mechanism (1) according to Claim 1, **characterized in that** the blocking means (4) comprises a lever (15) integral with the link (9) and which is brought closer to the lower end (3a) of the frame (3) when the jaw (5) is closed.
